# EUROPEAN PATENT APPLICATION

(11) **EP 2 706 025 A1**
(43) Date of publication of application: **12.03.2014**
(21) Application number: 12183509.4
(22) Date of filing: 07.09.2012
(51) Int. Cl.: B65G 43/10

(54) **Module and module system**

(71) Applicant: Svensk Kärnbränslehantering AB, 101 24 Stockholm (SE)
(72) Inventor: Laitinen, Heikki, 570 91 Kristdala (SE); Zetterberg, Tobias, 197 91 Bro (SE)
(74) Representative: Engdahl, Stefan

(57) **Abstract**

A module (101) for a transportation of pallets arranged to carry goods, wherein the module is arranged to be provided adjacently in series with another module. The module comprises an interface arranged for a communication with any adjacently provided module. The module, based on the communication, is arranged to determine if the module constitutes a start module (101 a), an intermediate module (101 b) or an end module (101 c) in the series.

## Description

### FIELD OF THE INVENTION

The present invention relates to a module and a module system. In particular, the invention relates to a module and a module system suitable for transportations of goods which are heavy and/or sensitive to shocks and vibrations.

### BACKGROUND OF THE INVENTION

As a result of the ever-increasing production of products in today's society, as well as an increased domestic and international trade, the demands on goods transportation has rapidly increased in terms of quantity and quality.

For the transportation of goods, objects and/or loads in virtually any kind of facility such as warehouses, stocks, airports, or the like, systems constituted by transportation modules are known. These system may comprise one or more modules which have a driving arrangement and which are placed in a row or a matrix, such that goods may be transported from one module to another module arranged in the row or in the matrix of modules, by means of the driving arrangement.

US2012/0004766 describes a multidirectional transport module for movement of goods packs, predominantly suitcases, wherein the aim of the transport module is a rapid transport of the goods packs. The modules may distribute the goods packs from a conveyor belt to a final destination, provided by a control system. The control system is designed to reserve the transport module for the transport of a goods pack in a given goods pack movement direction.

However, the disclosed transport module implies a relatively complicated and complex system for a transportation of goods. In view of this, there is a wish to provide a module which achieves a more efficient transportation of goods, and especially a transportation of heavy and/or shock, impact and/or vibration sensitive goods.

### SUMMARY OF THE INVENTION

It is an object of the present invention to provide a module which achieves a reliable transportation of goods, and especially of goods which are heavy and/or shock, impact and/or vibration sensitive.

This and other objects are achieved by providing a module having the features in the independent claim. Preferred embodiments are defined in the dependent claims.

Hence, according to the present invention, there is provided a module for a transportation of pallets arranged to carry goods. The module is arranged to be provided adjacently in series with another module, wherein the module comprises an interface arranged for a communication with an interface of any adjacently provided module. The module, based on the communication, is arranged to determine if the module constitutes a start module, an intermediate module or an end module in the series. A start module is arranged to transport a pallet on the module, and to pass the pallet to any adjacent module provided downstream of the start module. An intermediate module is arranged to receive a pallet from any adjacent module provided upstream of the intermediate module, to transport the pallet on the module, and to pass the pallet to any adjacent module provided downstream of the intermediate module. An end module is arranged to receive a pallet from any adjacent module provided upstream of the end module, and to transport the pallet on the module.

The present invention is advantageous in that a module is able to determine its relative position of a plurality of modules arranged in series, based on a communication between any adjacently provided modules, and that it is arranged to adapt its goods transportation properties (reception, transportation and/or passing of a pallet comprising goods) based on its position. As the module is able to adapt its transportation properties of a pallet merely based on its position in a series of modules, the module is thereby able to provide an autonomous transportation system which is able to operate without the need of a (central) control system arranged for a predetermined transportation path of the pallet. Hence, the present invention achieves a versatile and reliable module, which results in an efficient transportation of pallets.

The present invention is further advantageous in that the modules may be identical in their construction, i.e. that the modules need not be individually constructed and/or adapted in advance to e.g. a predetermined position in a series of modules and/or a predetermined transportation task of the module. This is highly advantageous, as a module of the present invention, arranged in a series of modules, may easily be replaced (e.g. during rearrangement and/or repair of the module(s)) by any other module, which is able to adapt to the transportation properties based on its position in the series. A further advantage of the present invention is that the manufacture costs of identical modules is reduced compared to a manufacture of modules of individual construction.

The present invention is further advantageous in that the modules are readily stored, moved, replaced and/or arranged in series, which leads to a highly versatile module for a transportation of pallets.

The present invention is further advantageous in that the relative simplicity of the transportation properties of the modules results in an uncomplicated and reliable transportation of pallets, wherein the module is arranged to transport a pallet from a start module to an end module. The module provided by the present invention is especially important for a safe transportation of goods on the pallets which are heavy and/or shock, impact and/or vibration sensitive. In contrast, modules and/or module systems in the prior art are predominantly adapted for goods such as suitcases, packages, parcels and/or boxes, and these module systems are often arranged for a rapid transport of goods and/or an optimization of goods transportation paths. Hence, prior art module systems are not suitable for heavy and/or shock, impact and/or vibration sensitive goods, whereas the uncomplicated, robust and reliable module of the present invention provides an ideal transportation of goods of this kind.

The module of the present invention is arranged for a transportation of pallets arranged to carry goods. By "pallet", it is here meant a portable platform or the like for handling, storing and/or moving goods. More specifically, the module of the present invention is arranged for a transportation of pallets which achieve an improved support of heavy and/or shock, impact and/or vibration sensitive goods during arrangement and/or transportation of goods on the pallet.

By "goods", it is here meant freight, articles, products, items, etc., wherein the goods may further be (very) heavy and/or (very) shock, impact and/or vibration sensitive. More specifically, the goods may comprise bentonite with the purpose of serving as a buffer material for protecting capsules in which used nuclear fuel is stored.

The module is arranged to be provided adjacently in series. By "series", it is here meant a (straight) line, row, sequence or the like. In other words, a plurality of modules are arranged to be provided one after the other in succession.

The module comprises an interface arranged for a communication with any adjacently provided module. By "interface", it is here meant virtually any means for communication between adjacently provided modules. It will be appreciated that the interface may operate wirelessly or by wire. Alternatively, the interface may be mechanical, i.e. that adjacently arranged modules may communicate with each other by means of a mechanical connection between the modules.

If a plurality of modules are provided adjacently in series, each module is arranged to determine if the module constitutes a start module, an intermediate module or an end module in the series, based on the communication between the modules. By "start module", it is here meant a module which is provided as a first module in a series of modules, in the transportation direction of a pallet. In other words, the start module does not have any module provided upstream of the start module in the transportation direction of a pallet. By "intermediate module", it is here meant a module which is provided between two adjacently provided modules in a series of modules. In other words, the intermediate module has a module provided upstream of the intermediate module in the transportation direction of a pallet, and a module provided downstream of the intermediate module. By "end module", it is here meant a module which is provided as a last module in a series of modules, in the transportation direction of a pallet. In other words, the end module does not have any module provided downstream of the end module in the transportation direction of a pallet. To clarify, by the word "downstream", it is here meant a direction of transportation of a pallet.

A start module is arranged to transport a pallet on the module, and to pass the pallet to any adjacent module provided downstream of the start module. Hence, a module of a plurality of modules provided adjacently in series, which has determined that it constitutes a start module in the series based on a communication with any adjacently provided module, is arranged to perform a transportation of a pallet on the module, and to pass (deliver) the pallet to any adjacent module provided downstream of the start module in the transportation direction of the pallet.

An intermediate module is arranged to receive a pallet from any adjacent module provided upstream of the intermediate module, to transport the pallet on the module, and to pass the pallet to any adjacent module provided downstream of the intermediate module. Hence, a module of a plurality of modules provided adjacently in series, which has determined that it constitutes an intermediate module in the series based on a communication with any adjacently provided module, is arranged to perform a reception of a pallet onto the module, to transport the pallet on the module, and to pass (deliver) the pallet to any adjacent module provided downstream of the intermediate module in the transportation direction of the pallet.

An end module is arranged to receive a pallet from any adjacent module provided upstream of the end module, and to transport the pallet on the module. Hence, a module of a plurality of modules provided adjacently in series, which has determined that it constitutes an end module in the series based on a communication with any adjacently provided module, is arranged to perform a reception of a pallet onto the module, and to transport the pallet on the module in the transportation direction of the pallet.

According to an embodiment of the present invention, the end module is arranged to prevent a passing of a pallet downstream of the end module. In other words, the end module is arranged to transport the pallet on the module, but not to pass on the module in a downstream direction, as the end module is the last module in the series of modules. Instead, the end module may hold the pallet on the module.

According to an embodiment of the present invention, a module is arranged to prevent a passing of a pallet downstream of the module if another pallet is provided on any adjacent module provided downstream of the module. The present embodiment is advantageous in that the module hereby avoids any collision of pallets, as the module is arranged not to pass the pallet in a downstream direction if any adjacent module, provided downstream, already holds another pallet.

According to an embodiment of the present invention, the transportation of pallets may be defined in one direction of the series of the plurality of modules. In other words, the module is arranged to transport pallets in one direction only, i.e. the downstream direction. The present embodiment is advantageous in that the module hereby provides an even more uncomplicated, robust and reliable transportation of pallets, which is especially important for a safe transportation of goods on the pallets which are heavy and/or shock, impact and/or vibration sensitive. In the present embodiment, any risk of pallet collisions is avoided, which on the other hand may occur if pallets are transported in two (or more) directions.

According to an embodiment of the present invention, the module may further comprise at least one sensor means arranged to determine a position of a pallet on the module. By "sensor means", it is here meant virtually any means for determining/estimating a position of a pallet on the module. The present embodiment is advantageous in that a module may adapt its transportation properties (reception, transportation and/or passing of a pallet comprising goods) based on the determined/estimated position of the pallet on the module. The present embodiment is further advantageous in that an (exact/precise) determination of the position of a pallet on the module, by the sensor means, contributes to an even more reliable transportation of pallets on the module. For example, the module may determine if a pallet is positioned at an upstream portion of the module (e.g. when the module is about to receive a pallet from an adjacent module provided upstream), a centre position of the module (e.g. when the module transports a pallet on the module), and/or a downstream portion of the module (e.g. when the module is about to pass the pallet to an adjacent module provided downstream), wherein the (exact) determination of the position of a pallet in a series of modules is particularly beneficial for a transportation of goods on the pallets which are heavy and/or shock, impact and/or vibration sensitive.

According to an embodiment of the present invention, the module may be arranged to communicate the position of a pallet on the module to any adjacent module provided downstream of the module by means of the interface. The present embodiment is advantageous in that an adjacent module provided downstream of the module may adapt and/or prepare its reception of the pallet, such that the transportation of the pallet becomes even further improved, e.g. in terms of efficiency and the saving of energy.

According to an embodiment of the present invention, the module may comprise a driving means arranged to transport a pallet. By the term "driving means", it is here meant e.g. a motor, one or more axles, one or more wheels, etc., with the purpose of transporting a pallet on the module. The present embodiment is advantageous in that each module is able to operate autonomously by means of the driving means, which even further contributes to the versatility of the module. For example, as each module may operate by means of an own driving means, it need not be operated by any central driving means, leading to an easily arranged and transportable module. Furthermore, the transportation properties of each module (reception, transportation and/or passing of a pallet comprising goods) may be performed individually by the modules by means of an individual driving means operation.

According to an embodiment of the present invention, the driving means of the module may be arranged to operate as a function of a position of a pallet on the module or of a position of a pallet on any adjacently arranged module. The present embodiment is advantageous in that the module may adapt and/or prepare the operation of its driving means dependent on the position of the pallet, which results in an efficient and energy-saving module. For example, an adjacent module provided downstream of the module transporting the pallet, may start to operate its driving means for a transportation of a pallet on the module (e.g. motor, wheels, etc.) at the moment the module provided adjacently upstream is about to pass the pallet to the module provided adjacently downstream. Analogously, a module provided adjacently upstream, which has passed a pallet to a module provided adjacently downstream, may accordingly turn off its driving means.

According to an embodiment of the present invention, the driving means may comprise at least one set of wheels arranged to rotate around at least one axis parallel to the width of the module and arranged to roll on a underside surface of a pallet. The present embodiment is advantageous in that the wheels of the module provides a smooth, gentle and cautious transportation of goods on the pallets, wherein the goods may be heavy and/or shock, impact and/or vibration sensitive.

According to an embodiment of the present invention, the driving means may comprise a first set of wheels arranged at a first side portion of the module, and a second set of wheels arranged at a second side portion of the module, wherein the first and second side portions are provided on opposite sides of the module. The present embodiment is advantageous in that the first and second set of wheels are provided at a relatively large distance from each other, such that the module provides a stable and robust arrangement of wheels arranged to roll on a underside surface of a pallet. This embodiment is highly beneficial for a transportation of heavy and/or shock, impact and/or vibration sensitive goods with high demands on transportation stability and robustness.

The wheels of the at least one set of wheels may comprise polyurethane, have a diameter of 90- 110 mm, such as 100 mm, and have a width of 35-45 mm, such as 40 mm. Wheels comprising polyurethane provides a high resistance to wear and a low rolling friction, which even further improves the transportation of pallets carrying heavy goods. The described wheels are further advantageous in that the diameter of the wheels is relatively small, resulting in a compact construction of the module and a low torque. Furthermore, the width of the wheels is relatively large, such that the pressure from a pallet carrying (extremely) heavy goods is reduced compared to a use of wheels with a relatively small width.

According to an embodiment of the present invention, the module may comprise at least one set of side wheels arranged to rotate around at least one axis parallel to the width and to the length of the module, and arranged to roll on a side surface of a pallet. The present embodiment is advantageous in that the side wheels of the module provides a smooth, gentle and cautious transportation of a pallet.

According to an embodiment of the present invention, the module may comprise a first set of side wheels arranged at a first side portion of the module, and a second set of side wheels arranged at a second side portion of the module, wherein the first and second side portions are provided on opposite sides of the module. The present embodiment is advantageous in that the side wheels are arranged to define a width between the first and second set of side wheels which is adapted to the width of the pallet, such that the module provides an exact transportation of the pallet only along the length of the module (i.e. the module provides a transportation of the pallet such that the pallet does not deviate in a direction of the width of the module). The present embodiment is further advantageous in that the first and second set of side wheels are provided at a relatively large distance from each other, such that the module provides a stable and robust arrangement of wheels arranged to roll on a side surface of a pallet.

The side wheels may comprise polyurethane, have a diameter of 70-80 mm, such as 75 mm, and have a width of 60-65 mm, such as 62 mm. The dimensions of the wheels are advantageous in that the width of the side wheels is relatively large, such that the module even further improves the support of a pallet in a direction of the width of the module.

According to an embodiment of the present invention, the module may comprise a base frame arranged to be provided on an underlying surface of the module. The present embodiment is advantageous in that the base frame is able to provide a strong and rigid connection between the module and the underlying ground, which contributes to an even more safe and stable transportation of goods which are heavy and/or sensitive to shocks and vibrations.

According to an embodiment of the present invention, there is provided a module system for a transportation of pallets arranged to carry goods. The module system comprises a plurality of modules according to any previously described embodiment, wherein the modules are arranged to be provided adjacently in series. It will be appreciated that the described advantages of the module also applies to the module system.

### BRIEF DESCRIPTION OF THE DRAWINGS

These and other aspects of the present invention will now be described in more detail, with reference to the appended drawings showing embodiment(s) of the invention.
Fig. 1 is a series of modules according to an embodiment of the present invention; and
Fig. 2 is a module according to an embodiment of the present invention.

### DETAILED DESCRIPTION OF THE EMBODIMENTS

In the following description, the present invention is described with reference to a module system, according to an embodiment of the present invention, arranged for transportation of pallets. It will be appreciated that the features and advantages of the modules of the module system also are applicable for a module of the present invention.

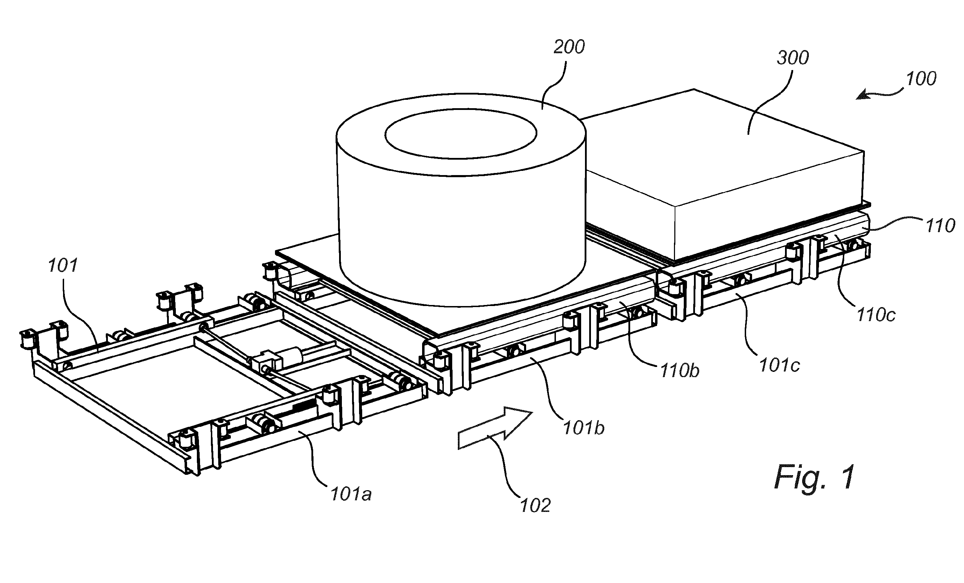

Fig. 1 shows a module system 100, wherein a plurality of modules 101 are arranged adjacently in series. Here, three modules 101 a-c are arranged in series, but it will be appreciated that virtually any number of modules 101 may be placed in series. Each module 101 comprises an interface (not shown) arranged for a communication with any adjacently provided module 101. The interface may be virtually any means for communication between the modules 101, such as a wireless communication or communication by wire. The interface may have one or more outputs for emitting signals, and one or more inputs for receiving signals for the communication between interfaces of adjacent modules 101 in the module system 100. It will be appreciated that interfaces of the described kind are known to the person skilled in the art, and a more detailed description of the interfaces is therefore omitted.

In the series of modules 101 of the module system 100, each module 101 is arranged to determine if the module 101 constitutes a start module, an intermediate module or an end module in the series of modules 101 based on the communication between the modules 101. Each module 101 may for example comprise a process unit, a control unit, a control system, or the like (not shown) for a determination if the module 101 constitutes a start module, an intermediate module or an end module in the series of modules 101, wherein the process or control unit of a module may process signals received from any adjacent module 101 for this determination. The determination of the relative positions of the modules 101 in the module system 100 may be explained by the following example: in Fig. 1, the (leftmost) module 101 a is arranged to determine that it is the start module 101 a in the series of modules 101 of the module system 100, wherein the downstream transportation direction of the modules 101 is defined by arrow 102. The determination may for example be based on a communication with the adjacently provided module 101 b downstream of module 101 a in the transportation direction of the series of modules 101 of the module system and/or that there is no module provided adjacent the module 101 a in an upstream direction of the module 101 a in the transportation direction (i.e. no communication is established between module 101 a and any module 101 provided upstream of module 101 a). Analogously, (middle) module 101 b in Fig. 1 is arranged to determine that it is the intermediate module 101 b in the series of modules 101 of the module system 100. The determination may for example be based on a communication with the adjacently provided module 101 c downstream of module 101 b in the transportation direction in the series of modules 101 of the module system, and the adjacently provided module 101 a upstream of module 101 b. Analogously, (rightmost) module 101 c in Fig. 1 is arranged to determine that it is the end module 101 c in the series of modules 101 of the module system 100. The determination may for example be based on a communication with the adjacently provided module 101 b upstream of module 101 c in the transportation direction and/or that there is no module provided adjacent the module 101 c in a downstream direction of the module 101 c in the transportation direction (i.e. no communication is established between module 101c and any module 101 provided downstream of module 101 c). Hence, of the three modules 101 a-c of the module system 100 arranged in series in Fig. 1, module 101 a is arranged to determine that it constitutes a start module 101 a, module 101 b is arranged to determine that it constitutes a intermediate module 101 b, and module 101 c is arranged to determine that it constitutes an end module 101 c. It will be appreciated that the number of modules 101 is arbitrary, and that virtually any number of modules 101 may be arranged in series. For example, if n modules 101 with numbers 1, 2, ...., n are arranged in series, module 1 constitutes the start module, one or more modules 2, 3, ..., n -1 constitute the intermediate module(s), and module n constitutes the last module.

The modules 101 of the module system 100 are arranged to receive, transport, pass and/or to hold one pallet 110 at a time. In Fig. 1, the start module 101 a is arranged to transport a pallet 110 on the start module 101a, and to pass the pallet 110 to intermediate module 101 b, provided adjacently downstream of the start module 101 a. It will be appreciated that the start module 101 a will not pass the pallet 110 to intermediate module 101 b if the intermediate module 101 b still holds a pallet 110 on the module 101 b, such that any collisions of pallets 110 is avoided. Fig. 1 shows an example of this situation, wherein the start module 101 a has passed the pallet 110b to intermediate module 101 b.

The intermediate module 101 b is arranged to receive a pallet 110 from the start module 101 a, to transport the pallet 110 on the intermediate module 101b, and to pass the pallet 110 to the end module 101 c. Hence, in the example of Fig. 1, the intermediate module 101 b is arranged to receive the pallet 110b from the start module 101a, and to transport the pallet 110b on the module 101 b. As the module 101 c already holds pallet 110c, the intermediate module 101 b will in this case not pass the pallet 110b to the end module 101 c, but instead hold the pallet 110b on the intermediate module 101 b, to avoid any collision of pallets.

The end module 101 c is arranged to receive a pallet 110 from the intermediate module 101 b and to transport the pallet 110 on the end module 101 c. Hence, in the example of Fig. 1, the end module 101 c has received pallet 110c from the intermediate module 101 b and transported the pallet 110c on the end module 101 c. End module 101 c is arranged not to pass the pallet 110c forward, but is instead arranged to hold the pallet 110c after receiving and transporting the pallet 110c. It will be appreciated that if end module 101 c holds a first pallet 110 (e.g. pallet 110c), it will be arranged not to receive a second pallet 110 (e.g. pallet 110b) to avoid any collision of pallets.

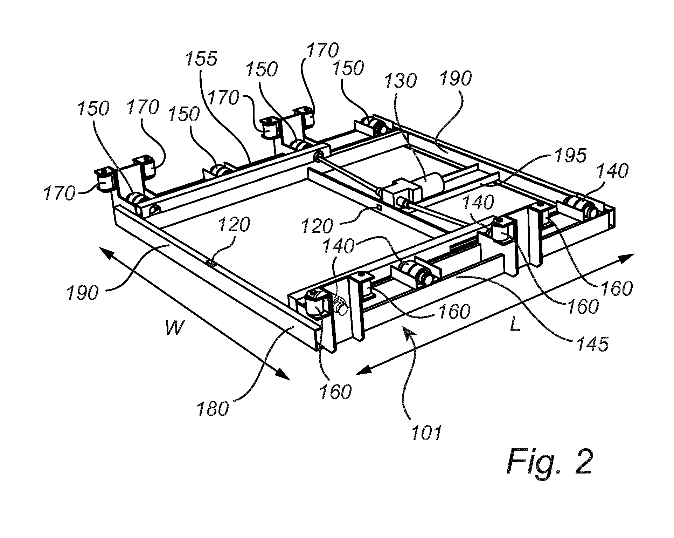

In Fig. 2, the module 101 comprises at least one sensor means 120 arranged to determine a position of a pallet 110 on the module. The sensor means 120 may be virtually any means for determining/estimating a position of a pallet 110 on the module, e.g. one or more inductive and/or optical sensor. It will be appreciated that sensors of the described kind are known to the person skilled in the art, and a more detailed description of the sensors is therefore omitted. In Fig. 2, two sensor means 120 are provided on the module 101, wherein one sensor means 120 is provided on a centred upstream portion of the module 101, and another sensor means 120 is provided on a centred downstream portion of the module 101. The position of a pallet 110 on the module 101, wherein the position is sensed by the sensor means 120, may be communicated to any adjacent module provided downstream of the module 101 by means of the interface. Hence, in the example of Fig. 1, the position of the pallet 110b on the intermediate module 101 b may be sensed by the sensor means 120 of the intermediate module 101 b and be communicated to the start module 101 a and/or the end module 101 c.

The module 101 in Fig. 2 comprises a driving means 130 arranged to transport a pallet, wherein the driving means 130 is exemplified as a motor 130. More specifically, the motor 130 may be an AC motor, coupled to a worm gear, with a shafting axle. The diameter of the shafting axle may be approximately 30 mm, which is suitable for a robust and reliable operation of the module 101. The motor 130 may further be arranged to operate as a function of a position of a pallet on the module 101 (the position of the pallet being centred on e.g. an upstream portion of the module 101, a centre portion of the module 101 or on a downstream portion of the module 101) or of a position of a pallet 110 on any adjacently arranged module. In the example of the module system 100 in Fig. 1, the motor 130 of the start module 101 a has transported the pallet 110b on the start module 101 a and passed the pallet 110b to the intermediate module 101 b, in accordance with the previously described operation of the module system 100. For example, the motor 130 of the intermediate module 101 b may operate as long as the pallet 110b is in physical contact with the intermediate module 101 b, e.g. from receiving the pallet 101 b from start module 101 a until passing the pallet 110b to the end module 101 c. Analogously, the motor 130 of the end module 101 c may operate as a function of the position of the pallet 110b on the intermediate module 101 b. For example, the motor 130 of the end module 101 c may operate as long as the pallet 110b is in physical contact with the intermediate module 101 b, e.g. from receiving the pallet 110b from the intermediate module 101 b.

In Fig. 2, the module 101 comprises a first set of wheels 140 arranged at a first side portion 145 of the module 101, and a second set of wheels 150 arranged at a second side portion 155 of the module 101. The first set of wheels 140 and the second set of wheels 150 are arranged to rotate around one or more axes parallel to the width W of the module 101, and are arranged to roll on a underside surface of a pallet 110. The first side portion 145 and the second side portion 155 are provided on opposite sides of the module 101 in the direction of the width W of the module 101.

Based on a preferred functionality of the module 101, it is suitable that four axes are arranged along the length L of the module 101, wherein two wheels of each set of wheels 140, 150 are arranged to rotate around each axis. The motor 130 may be coupled to at least one wheel of the first set of wheels 140 and at least one wheel of the second set of wheels 150. The motor 130 is preferably coupled to two axes of each set of wheels 140, 150, wherein one axis may be directly driven by the motor 130 and the other axis may be driven by the first axis by means of a driving belt, a chain, or the like. For the transportation of (extremely) heavy goods on the module 101, it is especially preferable that the module 101 comprises a duplex chain drive, e.g. according to the standard 08B-2, which provides a dynamic factor of safety of 14 and a service interval of > 2·10⁶ h.

The wheels of the first set of wheels 140 and/or of the second set of wheels 150 of the module 101 may comprise polyurethane. Furthermore, the wheels of the first set of wheels 140 and/or of the second set of wheels 150 may have a diameter of 90-110 mm, such as 100 mm, and have a width of 35-45 mm, such as 40 mm. These wheels are able to sustain a load of 350 kg each, and if the module 101 comprises 16 wheels (8 wheels of each set of wheels), the wheels are able to sustain a load of 350 kg x 16 = 5600 kg.

The module 101 of Fig. 2 further comprises a first set of side wheels 160 arranged at a first side portion 145 of the module 101, and a second set of side wheels 170 arranged at a second side portion 155 of the module 101. The first set of side wheels 160 and the second set of side wheels 170 are arranged to rotate around an axis parallel to the width W and to the length L of the module 101, i.e. around a vertical axis of the module 101 when arranged on a surface or a floor. The first set of side wheels 160 and the second set of side wheels 170 are further arranged to roll on a side surface of a pallet 110. Hence, in Fig. 2, the module 101 comprises a first and a second set of wheels 140, 150 arranged to roll on a underside surface of a pallet 110, and a first and a second set of side wheels 160, 170 arranged to roll on a side surface of the pallet 110.

The wheels of the first set of side wheels 160 and/or of the second set of side wheels 170 of the module 101 may comprise polyurethane. Furthermore, the wheels of the first set of side wheels 160 and/or of the second set of side wheels 170 may have a diameter of 70-80 mm, such as 75 mm, and have a width of 60-65 mm, such as 62 mm. These wheels are able to sustain a load of 600 kg each.

The width between the first set of side wheels 160 and the second set of side wheels 170, along the width W of the module 101, is 1700-1800 mm, such as 1750 mm.

The module 101 of the module system 100 further comprises a base frame 180 arranged to be provided on an underlying surface of the modules 101. The base frame 180 of the module 101 in Fig. 2 has a rectangular shape, comprising two parallel bars 190 which are space apart in the length L of the module 101. The bars 190 are attached to the first side portion 145 and the second side portion 155, preferably by welding, such that the bars 190, the first side portion 145 and the second side portion 155 define the base frame 180. An additional T-shaped support element 195 is attached (e.g. welded) to one of the bars 190 and the first and second side portions 145, 155, and may also form a part of the base frame 180. The bars 190 and/or the support element 195 comprise standardized "U" and "L" profiles for a reduction of manufacturing costs. The profiles may for example comprise one or more of the following types: U-100, U-180 and/or L-100x50x6.

The base frame 180 comprises fastening means (not shown) for fastening the module 101 to an underlying surface of the module 101, wherein the surface may be a floor, a table, a surface of a transporting means, etc., and wherein the surface preferably is flat. The base frame 180 may as an example comprise four bearing plates with holes for screws. FEM-calculations have led to a dimensioning of the base frame 180 such that it may be supported only by the bearing plates.

The modules 101 of the module system 100 of the present invention are arranged to receive, transport and/or to pass pallets 110 mainly in one direction, wherein the transportation of pallets 110 may be provided on and/or in association with e.g. feed tables, fork trucks, chassis for handling of buffer and/or replenishing elements, etc. The pallet 110 is provided for the arrangement and/or transportation of (extremely) heavy and/or shock, impact and/or vibration sensitive goods, and the properties of the modules 101 of the module system 100 as described provide an improved transportation of pallets 110 in terms of e.g. reliability, strength and robustness compared to module systems in the prior art.

The module system 100 of the present invention is arranged for a transportation of pallets 110 arranged to carry goods. Fig. 1 shows an example of a transportation of goods on a pallet 110, wherein a buffer ring 200 is arranged on the pallet 110b on the intermediate module 101 b, and a buffer block 300 is arranged on the pallet 110c on the end module 101 c. Further examples of goods which the pallet 110 is arranged to hold and/or transport are provided in Table 1.

**TABLE 1**

| Buffer ring | |
|---|---|
| Diameter: | 1630 mm |
| Inner diameter: | 1070 mm |
| Height: | 806 mm |
| Weight: | ca 2000 kg |

| Buffer block | |
|---|---|
| Diameter: | 1630 mm |
| Inner diameter: | 500 mm |
| Weight: | ca 2200 kg |

| Replenshing block | |
|---|---|
| Length: | 571 mm |
| Width: | 500 mm |
| Height: | 400 mm |
| Weight: | 230 kg / each |

| Bentonite pellets | |
|---|---|
| Bulk density: | ca 1600 kg/m³ |

The goods in Table 1 comprise bentonite (bentonite clay), wherein the purpose of the goods is to serve as a buffer material for protecting capsules in which used nuclear fuel is stored. The capsules, which may comprise copper and an insert of cast iron, may be arranged in an ultimate storage site (e.g. in primary rock), and the bentonite goods may be arranged around the capsules to protect the capsules from movements/vibrations in the primary rock. Hence, it is highly important that the transportation of the heavy bentonite goods is conducted cautiously, and that shocks, impacts and/or vibrations of the goods during transportation is avoided, or at least mitigated. The modules 101 of the module system 100 of the present invention is particularly suitable for the transportation of pallets 110 carrying (extremely) heavy and/or shock, impact and/or vibration sensitive goods, such as the bentonite goods described, and the modules 101 of the module system 100 thereby provide a safe and reliable transportation of the goods.

The modules 101 of the module system 100 are arranged to transport pallets 110 carrying approximately 2700 kg. Furthermore, the modules 101 of the module system 100 are arranged to be able to transport pallets 110 in a inclination of 1:100.

The transportation speed of pallets 110 on the modules 101 of the module system 100 is approximately 0.1 m/s, which ensures a reliable and robust transportation of pallets 110.

Even though the invention has been described with reference to specific exemplifying embodiments thereof, many different alterations, modifications and the like will become apparent to those skilled in the art. After studying this description, the described embodiments are therefore not intended to limit the scope of the invention, which is only defined by the appended claims. For example, the number of modules 101 arranged in series of the module system 100 may be arbitrarily large. Furthermore, the number of wheels of the modules 101, axes, etc., may be different from that disclosed. For example, each axis for the first and second set of wheels 140, 150 and/or first and second set of side wheels 160, 170 may hold more or fewer wheels than that disclosed. Furthermore, it will be appreciated that the size and/or shape of the modules 101 may be different from that shown in Figs. 1 and 2.

## Claims

1. A module (101) for a transportation of pallets (110) arranged to carry goods (200, 300), said module being arranged to be provided adjacently in series with another module, wherein said module comprises an interface arranged for a communication with an interface of any adjacently provided module, and wherein said module, based on said communication, is arranged to determine if said module constitutes a start module (101 a), an intermediate module (101 b) or an end module (101 c) in the series, wherein
a start module is arranged to transport a pallet on the module, and to pass the pallet to any adjacent module provided downstream of said start module,
an intermediate module is arranged to receive a pallet from any adjacent module provided upstream of said intermediate module, to transport the pallet on the module, and to pass the pallet to any adjacent module provided downstream of said intermediate module, and
an end module is arranged to receive a pallet from any adjacent module provided upstream of said end module, and to transport the pallet on the module.

2. The module as claimed in claim 1, wherein an end module is arranged to prevent a passing of a pallet downstream of said end module.

3. The module as claimed in claim 1 or 2, wherein a module is arranged to prevent a passing of a pallet downstream of said module if another pallet is provided on any adjacent module provided downstream of said module.

4. The module as claimed in any one of the preceding claims, wherein the transportation of pallets is defined in one direction (102) of the series of modules.

5. The module as claimed in any one of the preceding claims, wherein said module further comprises at least one sensor means (120) arranged to determine a position of a pallet on said module.

6. The module as claimed in any one of the preceding claims, wherein said module is arranged to communicate the position of a pallet on said module to any adjacent module provided downstream of said module by means of said interface.

7. The module as claimed in any one of the preceding claims, wherein said module comprises a driving means (130) arranged to transport a pallet.

8. The module as claimed in claim 7, wherein said driving means is arranged to operate as a function of a position of a pallet on said module or of a position of a pallet on any adjacently arranged module.

9. The module as claimed in claim 7 or 8, wherein said driving means comprises at least one set of wheels (140, 150) arranged to rotate around at least one axis parallel to the width (W) of said module and arranged to roll on a underside surface of a pallet.

10. The module as claimed in claim 9, wherein said driving means comprises a first set of wheels (140) arranged at a first side portion (145) of said module, and a second set of wheels (150) arranged at a second side portion (155) of said module, said first and second side portions being provided on opposite sides of said module.

11. The module as claimed in any one of the preceding claims, wherein said module comprises at least one set of side wheels (160, 170) arranged to rotate around at least one axis parallel to the width and to the length (L) of said module, and arranged to roll on a side surface of a pallet.

12. The module as claimed in claim 11, wherein said module comprises a first set of side wheels (160) arranged at a first side portion of said module, and a second set of side wheels (170) arranged at a second side portion of said module, said first and second side portions being provided on opposite sides of said module.

13. The module as claimed in claim 12, wherein the width between said first set of side wheels and said second set of side wheels is 1700-1800 mm, such as 1750 mm.

14. The module as claimed in any one of the preceding claims, wherein said module further comprises a base frame (180) arranged to be provided on an underlying surface of said module.

15. A module system (100) for a transportation of pallets (110) arranged to carry goods (200, 300), wherein said module system comprises a plurality of modules (100) according to any one of the preceding claims, wherein said plurality of modules are arranged to be provided adjacently in series.
